# EUROPEAN PATENT APPLICATION

(11) **EP 2 365 469 A1**
(43) Date of publication of application: **14.09.2011**
(21) Application number: 11460011.7
(22) Date of filing: 08.03.2011
(51) Int. Cl.: G06Q 20/00

(54) **Method for performing payment transaction using personal mobile device and arrangement for personal mobile device**

(30) Priority: 10.03.2010 PL 39067410
(71) Applicant: Telecash Spólka z Ograniczona Odpowiedzialnoscia, 00-359 Warzawa (PL)
(72) Inventor: Maluj, Cezary, 05-555 Tarczyn (PL); Malecki, Marek, 00-359 Warszawa (PL); Misiak, Michal, 09-402 Plock (PL); Ozga, Ireneusz, 01-483 Warszawa (PL)
(74) Representative: Pankowski, Jacek

(57) **Abstract**

The subject invention provides a method for performing a payment transaction between a user (1) of a personal mobile device (2) and a Merchant (4) at a point-of-sale (7) having a POS terminal (3) equipped with proximity communication technology, with the use of the personal mobile device (2) with a proximity communication module (15), where to the user (1) an account is assigned in a database of the Card Issuer Bank System (6). In this method, the personal mobile device (2) is moved closer to the POS terminal (3) so as to communicate wirelessly the personal mobile device (2) by means of the proximity communication module (15) with the POS terminal (3) at the point-of-sale (7) in order to sent at least one message comprising at least authentication data and the payment transaction amount, the authorization operation is performed and at least one message is sent to the Acquirer Bank System (5) and to the Card Issuer Bank System (6), where the Card Issuer Bank System (6) confirms availability of the transaction to charge the account of the user (1) of the personal mobile device (2), and the Acquirer Bank System (5) accepts the transaction amount, and the Acquirer Bank System (5) modifies the balance of the account of the Merchant (4), and the Card Issuer Bank System (6) modifies the balance of the account of the user (1) of the personal mobile device (2). Then to the POS terminal (3) a transaction request is sent to deliver to the user (1) of the personal mobile device (2) the transaction amount in cash, to be withdrawn at the point-of-sale (7). The invention also provides an arrangement of a personal mobile device (2) comprising at least a proximity communication module (15), a proximity communication module controller (16) and an antenna (17) for the proximity communication module (15), and comprising a secure element (18) having a processor for executing instructions with the use of the proximity communication module (15) connected to the memory where an application (14) for effecting electronic payments is stored.

## Description

The invention provides a method for performing a payment transaction using a personal mobile device and an arrangement of a personal mobile device, to be used in the mentioned payment transaction. In particular, the invention provides a method and arrangement for performing a payment transaction at a point of sale, using a personal mobile device provided with a proximity communication technology.

There are known and presently used diverse methods and arrangements for performing payments with the use of a personal mobile device with a module that supports proximity communication. There are known and used payment systems using proximity communication, such as e.g. Pay Pass from MasterCard, where payment is effected by means of a credit card based on an ISO/IEC 14443 (Proximity cards - PICCs) standard or using a mobile device with a proximity communication technology, e.g. a solution defined within a standard *de-jure* named Pay-Buy-Mobile (GSM Association White Paper, Pay-Buy-Mobile Business Opportunity Analysis, Version 1.0; November 2007), which was developed by GSM Association and is presently implemented by approximately thirty operators in various countries belonging to the initiative, or implemented in Japan by the firm NTT DoCoMo system named Mobile Suica used for performing traffic payments, and the system Edy which became a standard *de facto* in Japan. The latter two systems Mobile Suica and Edy are based on the proximity communication technology FeliCa ISO/IEC 15408 EAL4 developed and standardized by Sony Company.

International publication WO 2009/058009 discloses a method for making payments with the use of a first and second mobile communication devices, with a near field communication unit, where the first device by means of the near field communication unit receives the account data and the requested payment amount. Then the first device transmits a payment request to a first financial institution and the latter transmits the data to a second financial institution identified by the account data, and the second financial institution transmits a confirmation to the second mobile communication device.

International publication WO 2009/055719 discloses a system and method for conducting a payment transaction using a mobile phone as a relay. Upon receipt of information related to a transaction form merchant and entering identification data (e.g. PIN) by the user, the data are transmitted to the account issuer for authorization. The account issuer transmits an authorization message to the merchant, and said message completes the transaction.

International publication WO 2009/074849 provides a method for transferring money, locally or internationally, from a sender to a recipient, comprising creating of a virtual credit or debit card number, along with an expiration date for such card, transmitting the card number and the cart expiry date to the recipient, transmitting the card number and the transaction amount to the POS (point of sale) terminal, in order to initiate the transaction, authorizing the transaction, and delivering cash to the recipient or transferring the money to the recipient's account.

The known payment methods using mobile devices replace the complete conventional cash turnover process with exclusive circulation of electronic money. The method for performing a payment transaction using a personal mobile device according to the invention and the arrangement of a personal mobile device, to be used in the method of the invention, provide an alternative solution to the prior art.

The method for performing a payment transaction between the user of a personal mobile device and the merchant at the point-of-sale having a POS terminal equipped with a proximity communication technology, using the personal mobile device with proximity communication module, where to the user of the personal mobile device an account is assigned in a database of the Card Issuer Bank System, in which method the personal mobile device is moved closer to the POS terminal in so as to communicate wirelessly the personal mobile device by means of the proximity communication module with the POS terminal at the point-of-sale, to sent at least one message comprising at least the authentication data and the payment transaction amount, in which method an authentication transaction is performed and at least one message is sent to the Acquirer Bank System and to the Card Issuer Bank System, where the Card Issuer Bank System confirms availability of the transaction to charge the account of the user of the personal mobile device, and the Acquirer's Bank System accepts the transaction amount, and the Acquirer Bank System modifies the balance of the Merchant's account, and the Card Issuer Bank System modifies the balance of the account of the user of the personal mobile device, according to the invention is characterized in that to the POS terminal there is sent a transaction request to deliver to the user of the personal mobile device the transaction amount in cash to be withdrawn at the point-of-sale. Preferably, at least one message is sent from the POS terminal through the Acquirer Bank System to the Card Issuer Bank System and/or from the Card Issuer Bank System to the POS terminal through the Acquirer Bank System. In particular, at least one message from the Acquirer Bank System to the Card Issuer Bank System and/or at least one message from the Card Issuer Bank System to the Acquirer Bank System is sent through the Trusted Service Manager System. The personal mobile device, in particular, comprises a secure element equipped with memory, where an application is installed for effecting electronic payments, said application comprising at least a set of instructions to execute a payment transaction and data to execute a payment transaction, where the Trusted Service Manager System delivers, activates and/or configures the application for effecting electronic payments for the personal mobile device of the user, and the Trusted Service Manager System manages the memory of the secure element in the personal mobile device of the user. In particular, delivering, activating, configuring and/or managing the application for effecting electronic payments in the secure element of the personal mobile device is effected by the Mobile Network Operator via cellular telephony network with the use of an OTA interface. Delivering, activating, configuring and/or managing the application for effecting electronic payments in the secure element of the personal mobile device is conducted in particular by transmitting binary SMS messages. Optionally, delivering, activating, configuring and/or managing the application for effecting electronic payments in the secure element of the personal mobile device is conducted with the use of a terminal device connected by wire or wirelessly with the Internet network, which terminal communicates with the personal mobile device of the user, by wire or by the proximity communication module. Preferably, the secure element is a UICC Card. In particular, the authentication operation is performed with the use of an application for effecting electronic payments installed in the personal mobile device of the user. The authentication operation is performed, in particular, through the Card Issuer Bank System, upon entering the PIN by the user of the personal mobile device. In particular, transaction request to deliver to the user of the personal mobile device the transaction amount in cash is sent from the Acquirer Bank System to the POS terminal. Preferably, the user of the personal mobile device is a holder of a debit and/or credit card, associated with the account data stored in the Card Issuer Bank System, and sending of at least one message between the personal mobile device and the POS terminal is conducted using a protocol for wireless communication for debit/credit cards.

An arrangement of a personal mobile device comprising at least a transceiver unit for transmitting and receiving radio frequency signals, having an antenna for receiving radio frequency signals, a processor coupled with transceiver unit, memory connected to the processor, and a graphic user interface connected functionally to the processor and memory, which arrangement comprises a proximity communication module, a proximity communication module controller and an antenna for the proximity communication module, according to the invention is characterized in that it comprises a secure element with a processor for executing instructions with the use of the proximity communication module connected to the memory where the application for effecting electronic payments is loaded. Preferably, the secure element is a UICC card containing an application for effecting electronic payments. In particular, the application for effecting electronic payments is an application for carrying out the method defined above.

The invention provides a method and arrangement for cash withdrawal at a point-of-sale with the use of a mobile device equipped with a proximity communication module. This constitutes an alternative for electronic money systems, since it facilitates access to the conventional money which still play an important role in everyday minute payment operations. The invention enables obtaining small amounts of cash, instead of the use of an ATM that is sometimes hardly accessible.

The solution according to the invention does not require the use of the so-far existing cash withdrawal methods which in conventional payment systems require expensive operations of convoying cash between the shop-bank-ATM-shop. The solution of the invention eliminates or alleviates the need to perform such operations as convoying, protection of transport by security agencies, protection of ATM, and provides access to cash even with a limited number of locally available ATMs, as well as reduces the risk due to transporting, delivering and collecting cash. The solution of the invention does not require the use of payment cards, and this allows to limit the use and number of plastics access cards.

The use of the solution of the invention, due to the fact that personal mobile devices are commonly used, provides the user in practice with an undisturbed access to cash, in particular in the case of necessity to make payments in such places as: facilities of public administration bodies, points of sale, in particular small local points of sale, taxi, public transport, service facilities, in particular small local service facilities, etc. The use of the invention ensures considerably higher cash accessibility, since the number of points of sale is statistically ten times greater than the number of ATMs. Moreover, the method of the invention, using a terminal within a point of sale, reduces risk of unauthorized copying data.

Furthermore, the solution of the invention allows making the office administration in companies and institutions more efficient due to a more flexible and simplified system for transferring advance cash to the employee, and it ensures more physical safety of the user who withdraws cash inside commercial facilities in close vicinity of a point of sale.

The method and arrangement of the invention are explained more specifically in relation to the enclosed drawing, where Fig. 1 is a scheme of a system for carrying out the method for performing a payment transaction according to the invention, for delivering cash to the user of a personal mobile device; Fig. 2 is a scheme of a preferred modification of the system for carrying out the method for performing a payment transaction according to the invention, so as to deliver cash to the user of a personal mobile device; Fig. 3 shows the entities involved in the transaction and a system for communication and modification of the balance of accounts between them; Fig. 4 shows an arrangement of a personal mobile device with a NFC proximity communication module and a secure element; and Fig. 5 illustrates an exemplary method for performing a payment transaction, for delivering cash to the user of a personal mobile device.

Throughout this specification of the invention and the patent claims there are used some terms, the meaning of which should be understood according to the definitions as explained below.

A Personal Mobile Device (Personal Mobile Device/Handset) is a mobile device that constitutes a personal property of the user and is provided with a proximity communication module and with a secure element, preferably such as a UICC Card. Preferably, the personal mobile device has a slot for insertion of the UICC Card. Preferably, the personal mobile device comprises a transceiver unit to be used for communication with a cellular telephony network. Although the personal mobile device is any wireless device that enables the user to perform a transaction with the merchant by means of a point of sale terminal, a preferred personal mobile device is a cellular phone equipped with a proximity communication module and a secure element.

A Secure Element is a chipset included in the personal mobile device, comprising memory for storing data, and comprising a processor for executing instructions using the proximity communication module. The secure element stores in its memory such data as a set of instructions and data necessary for performing a payment transaction which data are suitably protected against cryptographic or physical attack. Within the secure element private keys are stored which are protected against access from outside and they are not made accessible outside. The private keys are unique for each secure element and they are individually assigned to the secure element. Basing on the private keys, session keys are generated to be used in each payment transaction being performed.

In the solution of the invention, the functions of the secure element are preferably fulfilled by the UICC Card. Nevertheless, the invention envisages fulfilling physically or logically of the functions of the secure element by any other element in the personal mobile device. For example, the secure element may be a separate module in the personal mobile device or another memory card.

A UICC Card (Universal Integrated Circuit Card) is a card equipped with an electronic arrangement comprising a non-volatile memory with stored information concerning the user's account and comprising an Application for effecting electronic payments. Preferably, the card is a 3GPP TS102 221 standard compatible SIM/USIM card (Universal/Subscriber Identity Module).

The Application for effecting electronic payments is a set of instructions and data necessary for performing a payment transaction and it involves memory necessary to perform a cash withdrawal transaction. The Application is loaded into the memory of the secure element, for example to the UICC card. The secure element also comprises data concerning the configuration of the application for effecting electronic payments, and the processor secure element is intended for executing the application with the use of the proximity communication module. The application for effecting electronic payments for example is developed basing on the Java Card technology. Preferably, the application for effecting electronic payments supervises encryption, authorization, reads out the data stored in the secure element necessary for performing the transaction, such as the account number, encrypting algorithm, the name of the Card Issuer Bank, the card expiry date, and it enables access to the information concerning the balance of the account, record of payments, for example withdrawals, and it makes possible to establish authorization operation as a default operation. In one of preferred embodiments, the application for effecting electronic payments comprises data to use several accounts of different Card Issuer Bank Systems and use several different kinds of cards, such as e.g. a debit card, a credit card, which can be predefined.

A debit card and a credit card within this specification of the invention and the patent claims is a physical medium for storing data related to the account data stored in the database of the Card Issuer Bank System that enable performing an electronic payment process. An exemplary debit and/or credit card is a plastics card with a magnetic strip or with a chipset.

The user (Card holder and/or Mobile Subscriber) of the personal mobile device, throughout this specification of the invention and the patent claims is an entity who possesses the mobile device and has an account which account means a set of information held in a database of the Card Issuer Bank System. Preferably, the user of a personal mobile device is registered in a database of the entity that manages the application for effecting electronic payments loaded into the UICC Card. Preferably, the entity that manages the application for effecting electronic payments is a Trusted Service Manager that manages the application by means of the Trusted Service Manager System. Preferably, the user has a debit and/or credit card which is/are associated to the data of the account recorded in a database of the Card Issuer Bank System that enable performing the electronic payment process. More preferably, the user of a personal mobile device is a subscriber of a Mobile Network Operator.

A point-of-sale terminal (Point-of-Sale = POS), or a POS terminal is a POS device equipped with an interface, comprising at least one electronic unit and executing instructions necessary to perform a payment transaction. The POS device is equipped with a proximity communication module and a module for communication with a private network of at least one institution, for performing electronic payment transactions. For example, a private network is a network configured specifically for an institution VPN (Virtual Private Network), where the VPN is understood as a secure tunnel in a packet-based Internet network. Preferably, the POS terminal also comprises a module for performing authentication operations upon a connection is established using the proximity communication module with the personal mobile device.

A Merchant is an entity that manages the point of sale (POS) where the POS terminal installed, said terminal being equipped with a proximity communication technology. The Merchant has an account that is a set of information stored in a database of the Acquirer Bank System.

Card Issuer Bank System is a system comprised of an encrypting module, decrypting module, authentication module and client database where information concerning issued credit/debit cards and client account numbers are stored. It performs transaction authorization process and it can perform authentication by verification of correctness of PIN. Throughout this specification of the invention and the patent claims, a client of the Card Issuer Bank is the user of a personal mobile device.

Acquirer Bank System is a system that may access the database comprising information concerning the merchants' accounts. The Acquirer Bank performs operations for settling transactions of the Merchant. The Bank Acquirer System may comprise a mechanism for supporting communication between the POS terminal, and the Card Issuer Bank System.

In a particular embodiment, the Card Issuer Bank and the Acquirer Bank are the same, i.e. they correspond to the same financial institution. Nevertheless, even in the case of identical financial institution, the Card Issuer Bank System and the Acquirer Bank System correspond to separate bank systems that operate within one financial institution.

A Trusted Service Manager System (Trusted Service Manager - TSM) is an intermediate system between the Card Issuer Bank System and the Acquirer Bank System and the entity that directly manages the memory of the UICC Card. Preferably, the Trusted Service Manager System manages the memory of the UICC Card. The Trusted Service Manager System provides a platform by means of which it is possible to handle the payment accounts of such clients as the user of a personal mobile device. It comprises a database of the user accounts such as the user of a personal mobile device. More preferably, the Trusted Service Manager System authorizes the Mobile Network Operator to manage the memory of the UICC Card, and as a result the Mobile Network Operator manages the memory of the UICC Card.

The Trusted Service Manager System has interfaces that perform the following functions:
- protection for an end-to-end transaction, inter alia by means of encrypting the channel,
- managing the lifetime cycle of the application for effecting electronic payments, execution of instructions that enable performing installation, activation, deactivation, locking, configuration of the application,
- activating new users - preparing the corresponding set of data in a message form that enables personalization of the application for effecting electronic payments,
- providing access to the application for effecting electronic payments for the OTA (Over-the-Air) technology or a further technology used by the entity that manages the memory of the UICC Card,
- personalizing the application for effecting electronic payments by means of the OTA technology or a further technology used by the entity that manages the memory of the UICC Card on the mobile device,
- activation / deactivation of additional services,
- updating the EMV (Europay, Mastercard, Visa) meter for transactions.

A Mobile Network Operator (e.g. a cellular telephony network operator) is an Operator who supervises maintaining and rendering access to the cellular telephony network and the associated infrastructure. Preferably, a subscriber of the cellular telephony network is the user of a personal mobile device, and in this network the personal mobile device is logged in. Preferably, the cellular telephony network Operator is authorized by the Trusted Service Manager System to manage the memory of the UICC Card.

A Mobile Network (cellular telephony network) is a network of a cellular telephony Operator which network preferably provides access to a platform for developing a service application (such as the application for effecting electronic payments), ensures room on the UICC Card for the application for effecting electronic payments and provides infrastructure for wireless communication (radio frequency signal transmitters/receivers, telephone exchange, systems for IP communication, telephone numbers assigned to the subscribers, etc.). Preferably, the installation and managing of the application for effecting electronic payments is done with the use of the OTA technology (Over-the-Air).

OTA (Over-the-Air) is a commonly known manner of management over a mobile device and applications installed therein in cellular networks. OTA enables: remote installation of the application, remote managing its life time cycle (activation, turning off, uninstallation), remote establishing new encrypting algorithms. The manner in which the OTA is executed depends on the cellular network Operator and it can be effected e.g. by means of a set of specific SMS messages.

The method of the invention envisages providing security of a payment transaction effected between the user of a personal mobile device and the Merchant. Safety of the transaction should be understood within the following categories: authentication, confidentiality, data integrity and non-repudiation. Confidentiality of a transaction is ensured by the use of suitable typical and known encrypting algorithms. The encrypting algorithm used is pre-established or is dynamically selected in the initial phase of opening a payment transaction. Examples of algorithms used for securing transaction include AES (Advanced Encryption System) with a key of variable length or DES or 3xDES (Triple Data Encryption Standard). With regard to the above, the messages sent between the individual systems (which systems include: the personal mobile device, the POS terminal, the Acquirer Bank System, the Card Issuer Bank System, the Trusted Service Manager System) are encrypted messages.

As indicated above, the secure element comprises keys to provide confidentiality, data integrity and authentication of a transaction. These keys are unique and individually assigned to the secure element. Non-repudiation of a transaction is guaranteed by inaccessibility to the keys outside the secure element. In a payment transaction of the invention session keys are used that are obtainable from unique keys, to be used only once for the transaction being initiated.

Preferably, data integrity and authentication of messages sent during a payment transaction performed between the individual systems (which systems include: the personal mobile device, the POS terminal, the Acquirer Bank System, the Card Issuer Bank System, the Trusted Service Manager System) is protected with a MAC (Message Authentication Code) code.

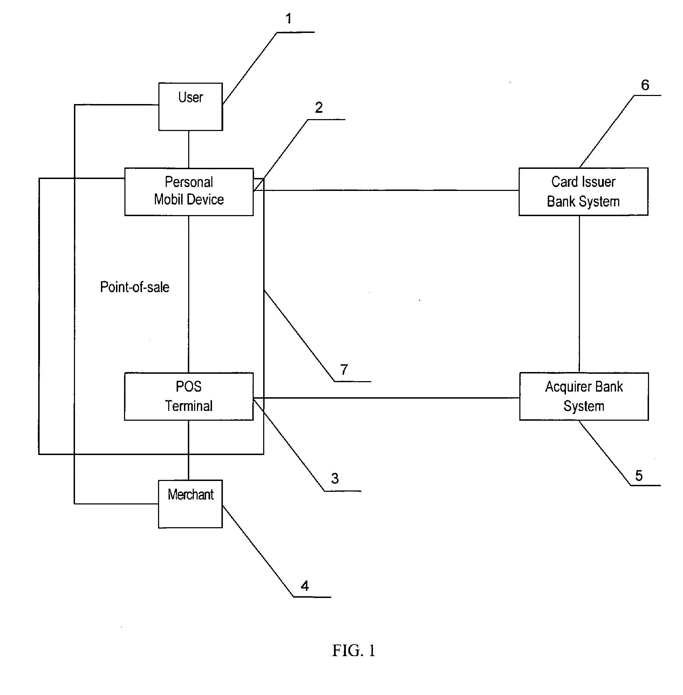

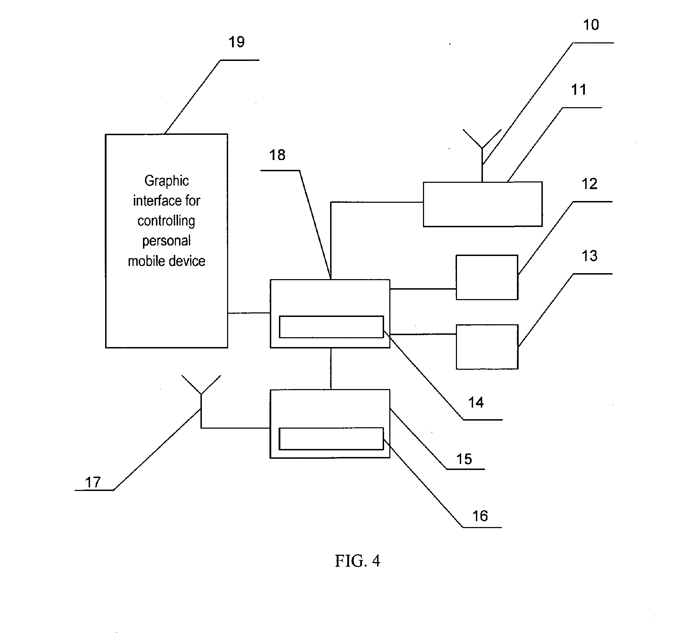

The method for performing a payment transaction, for delivering cash to the user of a personal mobile device 2 at a point-of-sale 7 is performed in operations carried out between these systems, as illustrated in Fig. 1. The constituents of the personal mobile device 2 are shown in Fig. 4.

The payment transaction consisting on delivering cash is performed at the points-of-sale 7 that are equipped with a POS terminal 3 with a proximity communication module. The user 1 of the personal mobile device 2 has at his/her disposal a personal mobile device 2 equipped with a proximity communication module 15 and a secure element 18, such as a UICC card. Preferably, in the memory of the secure element 18, such as a UICC card, there is installed an application 14 for effecting electronic payments, activated and configured through the Trusted Service Manager System 8, for example with the use of an OTA interface, when the personal mobile device 2 is logged into a cellular telephony network or with the use of a device rendered accessible by the Trusted Service Manager System 8. In another embodiment, the personal mobile device 2 is provided with a UICC card with a preinstalled application 14 for effecting electronic payments. The user 1 of the personal mobile device 2 is also an account holder and data associated with said account are held within the Card Issuer Bank System 6; for example the user 1 is a holder of debit and/or credit card issued by the Card Issuer Bank System 6. The user 1 makes a selection of the account that will be charged with the payments to be made. Before initiation of a payment transaction, the user 1 enters data related to a value of the amount to be defined, to which payments may be made with default authentication.

The user 1 of the personal mobile device 2 defines the value of the amount to be withdrawn at the point-of-sale 7. By means of the proximity communication module 15 with the use of the application 14 for effecting electronic payments in the personal mobile device 2 the user 1 communicates with the POS terminal 3. Interaction between the personal mobile device 2 and the POS terminal 3 of the Merchant 4 using the proximity communication technology is effected as a result of bringing the personal mobile device 2 closer to the POS terminal 3 and is performed by transmission of at least one message between the personal mobile device 2 of the user 1 and the POS terminal 3 of the Merchant 4, using e.g. existing protocols dedicated for wireless communication for traditional debit/credit cards.

Authentication operation is performed by the user 1 entering the PIN code by means of the graphic interface 19 of the personal mobile device 2. In another embodiment, authentication operation is performed without entering the PIN code, if e.g. authentication is performed within the application 18 for effecting electronic payments, or if authentication is performed by the Card Issuer Bank System 6.

At least one message with the transaction amount along with information related to authentication is sent to the Card Issuer Bank System 6. The message sent is encrypted with the use of session keys (obtained from private keys) and a pre-established algorithm as provided above. Preferably, the message includes a MAC code (Message Authentication Code).

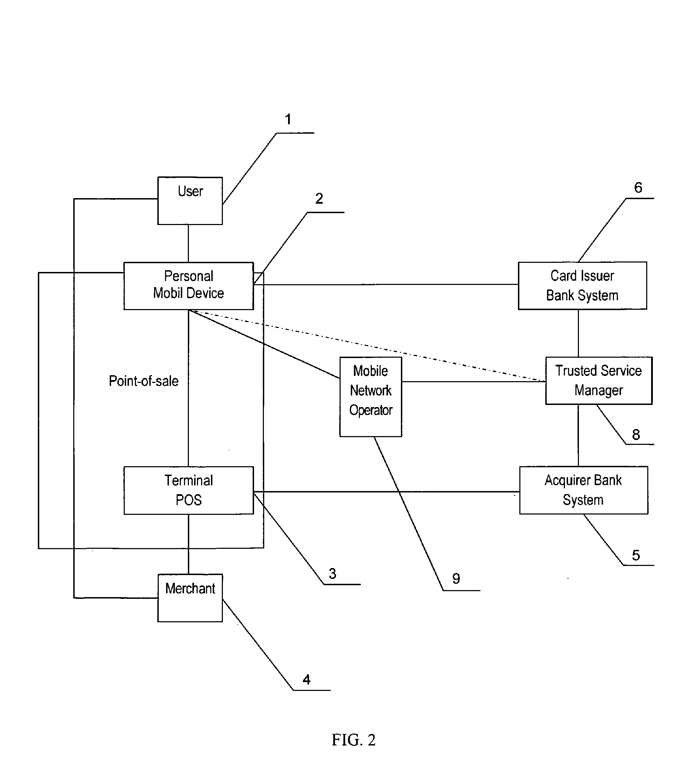

The invention envisages direct transmission of a message from the POS terminal 3 to the Card Issuer Bank System 6, but preferably transmission of a message is conducted by means of the Acquirer Bank System 5 (as illustrated in Fig. 1), with regard to the presence of a constant secure link POS terminal 3 - Acquirer Bank System 5. In a more preferred embodiment, a message is transmitted from the Acquirer Bank System 5 to the Card Issuer Bank System 6, by means of the Trusted Service Manager System 8 (as illustrated in Fig. 2).

The Card Issuer Bank System 6, having verified availability of the transaction (e.g. verification the PIN code, checking the amount of funds on the account), sends at least one message confirming availability of the transaction, charging the withdrawn amount against the amount of the user 1 of the personal mobile device 2 by the Card Issuer Bank System 6 (authorization). In another embodiment, the Trusted Service Manager System 8 confirms availability of the transaction with charging the withdrawn amount against the account of the user 1 of the personal mobile device 2 by the Card Issuer Bank System 6.

At least one confirmation message is sent by the Card Issuer Bank System 6 to the Acquirer Bank System 5. The message includes at least information concerning the amount that should be booked to the account of the Merchant 4 by the Acquirer Bank System 5. In another embodiment, this operation is performed by the Trusted Service Manager System 8. The Acquirer Bank System 5 acknowledges the transaction amount received on the account of the Merchant 4. The message with a request for delivering cash to the user 1 of the personal mobile device 2 is sent to the POS terminal 3, and on the basis of the request the Merchant 4 delivers cash to the user 1 of the personal mobile device 2, at the point-of-sale 7.

If the user 1 of the personal mobile device 2 is a subscriber at the Operator 9 cellular telephony network, by intermediaries of the Operator 9 of the cellular telephony network, after the payment transaction is completed, preferably an SMS notification is sent to the personal mobile device 2 of the user 1 said notification including information with parameters of the payment transaction performed.

The solution of the invention uses a secure element 18 to ensure safety of the transaction as commented above. In a preferred embodiment, transaction safety is provided by a UICC Card. The UICC card provides so called logic safeness (confidentiality of electronic requests, data integrity, authentication, non-repudiation) and physical safeness (as it is resistant to input of changes and copying data). The UICC card, in a function of the secure element, comprises in particular private keys unique for this card used for generating session keys for the payment transaction currently being performed.

The solution of the invention particularly preferably is intended for the users 1 who are subscribers with the Operators 9 of cellular telephony networks operating in a prepaid and in a postpaid model, who together with the Trusted Service Manager System 8 install the application 14 for effecting electronic payments on the UICC card in the personal mobile device 2 of the user 1.

Preferably, the Operator 9 of the cellular telephony network offers space on the UICC card for the application 14 for effecting electronic payments. The application for effecting electronic payments 14 may be installed on the UICC Card upon request by the Operator 9 of a cellular telephony network for the user 1 of the personal mobile device 2, before the personal mobile device 2 is received by the user 1, or it can be installed during using of the personal mobile device 2 by the user 1, from the services rendered by the Operator 9 of the cellular telephony network. Installation is then effected through a remote OTA interface (Over-the-Air). The manner in which the OTA interface operates is defined by the competent standardization bodies suitably to the technology used by the MNO (Mobile Network Operator). The authorized entity to input changes through the OTA interface is the Operator 9 of the cellular telephony network who has the corresponding encrypting keys. The OTA interface enables managing the life time cycle of the application 14 for effecting electronic payments, e.g. it enables activation, uninstallation, temporal locking or updating the application 14 for effecting electronic payments.

Data transmission by means of the OTA interface is protected on three layers: radio (first) layer, transport (fourth) layer and application (seventh) layer in the ISO OSI model.

In another exemplary embodiment, installation of the application 14 for effecting electronic payments on the UICC Card is performed by means of a device provided with an interface and a slot for insertion of the UICC Card, or with the use of a wired or wireless internet link using a terminal that establishes a wired or wireless connection with the personal mobile device 2 of the user 1, e.g. with the use of a module for Bluetooth or IR communication.

The application 14 for effecting electronic payments is managed by the Trusted Service Manager System 8, who is responsible for updating the application 14, in particular for personalization of the application 14 with the data of the user 1 of the personal mobile device 2. The Trusted Service Manager System 8 manages and provides suitable encrypting keys used in communication between the personal mobile device 2 of the user 1, and the financial institution systems: Card Issuer Bank System 6 and Acquirer Bank System 5.

Communication with the UICC card installed in the personal mobile device 2 is carried out through SMS binary messages sent by the Operator 9 of the cellular telephony network to the personal mobile device 2, where they are directly transferred to the UICC Card. Authorization of the SMS messages consists in that the binary SMS is specifically and uniquely encrypted by the Operator 9 of the cellular telephony network and it can be decrypted solely with the use of the UICC card to which it has been specifically sent. Algorithms selected for encrypting are established within ETSI specification. Communication with the UICC card with the use of the devices for direct management of the memory of the UICC card can be effected by emulation of specifically encrypted SMS messages or by a dedicated protocol.

In another example, where the application 14 for effecting electronic payments is installed without involving the Operator 9 of the cellular telephony network, safe communication in the process for managing the lifetime cycle of the application 14 is limited to establishing a secure connection, for example with the use of the SSL/TLS mechanism, between the Trusted Service Manager System 8 and the personal mobile device 2. Installation of the application 14 for effecting electronic payments on the UICC Card is performed then for example with the use of a device equipped with an interface and slot for the UICC card or with the use of an Internet connection via a terminal that connects with the personal mobile device 2 of the user 1 by wire or wirelessly, e.g. with the use of a module for Bluetooth or IR communication.

In the method for performing a payment transaction, according to the invention, in order to ensure transaction safety, preferably the infrastructure of the public key (Public Key Infrastructure, PKI) is used which infrastructure is based on the SSL/TLS mechanism (Secure Sockets Layer/Transport Layer Security).

The account data are stored in a secured database within the Trusted Service Manager System 8. If it is required to activate and personalize the application 14 for effecting electronic payments, three kinds of secure connection are established.
1. By means of the personal mobile device 2 a packet connection is established by means of the Radio Access Network (RAN) of the Operator 9 of the cellular telephony network. Communication through the OTA is encrypted in the first layer of the OSI model (Open System Interconnection ISO) basing on the protocols established by the standardization bodies CDMA and GSM. Safety in such connection is ensured and controlled by the Operator 9 of the cellular telephony network who manages the keys used for data encryption. Encryption in RAN ensures confidentiality and privacy for data exchange between the personal mobile device 2, and the core of the cellular telephony network. The core of the cellular telephony network should be understood as an arrangement of devices that receive packets transmitted by the personal mobile device 2 directly from RAN. The received data upon decryption are sent to the desired device. Safety is also ensured for attempts to sniff data in the radio network.
2. At the moment when a packet-based connection is established, the personalization tool in the mobile device establishes secure connection with the use of the TLS to the Trusted Service Manager System 8 in the fourth layer of the ISO OSI model.
3. Further on, the Trusted Service Manager System 8 establishes secure connection to the secure element 18 of the personal mobile device 2 preferably with the use of the GlobalPlatfrom Secure Channel Protocol operating in the seventh layer of the ISO OSI model. The communication at this level is protected by means of keys issued by the Card Issuer Bank System 6.

The method of this invention envisages a solution where the Trusted Service Manager System 8 has no access to the data sent by the Card Issuer Bank System 6 to the personal mobile device 2. In such preferred solution, the Trusted Service Manager System 8 operates in a "pass-through" operation mode.

### Authentication

In the method of the invention, the message with the information concerning the account of the user 1 of the personal cellular device 2 (the name of the Card Issuer Bank, account number and expiry date) in an encrypted form (e.g. by DES/3xDES or AES) is sent to the POS terminal 3. Preferably, the message with the mentioned information is provided with a MAC code (Message Authentication Code). The POS terminal 3 sends the message to the Card Issuer Bank System 6. The Card Issuer Bank System 6 verifies whether the input PIN is consistent with the information in the database of the Card Issuer Bank 6, assigned to the debit/credit card and/or the customer's account, where the customer is the user 1 of the personal mobile device 2. If the input PIN is correct, the Card Issuer Bank System 6 resends the number of the bank account of the user 1 to which the specific debit/credit card is associated. Then, an inquiry is sent for authorization of the transaction against the specific account of the user 1 of the personal mobile device 2. Upon successful authorization, the corresponding amount is charged against the account of the user 1 of the personal mobile device 2, and the amount is credited to the account of the Merchant 4.

The invention envisages alternative solutions in which another place is used for authentication, authorization and rendering the transaction data accessible. Authentication of the user 1 of the personal mobile device 2, i.e. verification of the PIN, is preferably performed within the application 14 for effecting electronic transactions on the UICC Card. Under suitable default settings, preferably the transaction is carried out without necessity to verify the PIN. Such procedure is envisaged due to the fact that the subject solution is substantially intended for withdrawal of small amounts of cash, and the default authentication provides for easy and quicker operations of cash withdrawal at the point-of-sale 7. In order to enhance security (exclude possibilities for fraudulent acts), the personal mobile device 2 is equipped with an arrangement for turning off/deactivation of the proximity communication module or locking operation of the application of the system. Turning on/deactivation of the proximity communication module may be effected by an operation within the application or by pressing a button on the casing of the personal mobile device 2. The application 14 or directly the operating system of the personal mobile device 2 causes programmed turning off of the module 15 or power cut-off to disable flow of electric signals that initialize the procedure.

For the purposes of authentication and/or authorization, there are used, inter alia, mechanisms provided under the specifications of elements of the cellular network. Each UICC Card along with the personal mobile device comprises:
- a telephone number of the subscriber IMSI (International Mobile Subscriber Identity) assigned to the card, and a temporarily assigned number changed during the session TMSI (Temporary Mobile Subscriber Identity), to ensure privacy of the subscriber;
- preset encryption keys, so called pre-shared key; in the UMTS technology the encryption keys are longer than the keys for GSM;
- a preset authentication algorithm, a key generation algorithm and an information encrypting algorithm loaded in the telephone;
- a PIN assigned to the card.

Analogously, the constituent elements of the cellular network have algorithms and keys for enabling the following operations: authentication, authorization, decryption/encryption of information in the communication channel.

Exemplary method for performing a payment transaction

The user 1 of the personal mobile device 2 is a holder of an account managed by the Card Issuer Bank System 6 and optionally a debit/credit card issued by the Card Issuer Bank System 6. The personal mobile device 2 is equipped with an application 14 for effecting electronic payments and a proximity communication module 15. The Merchant 4 is an entity who manages a point-of-sale 7, where the POS terminal 3 is installed, said terminal being equipped with a proximity communication technology. The Merchant 4 has an account managed by the Acquirer Bank System 5, said account being understood as a set of information stored in a database with the Acquirer Bank System 5.

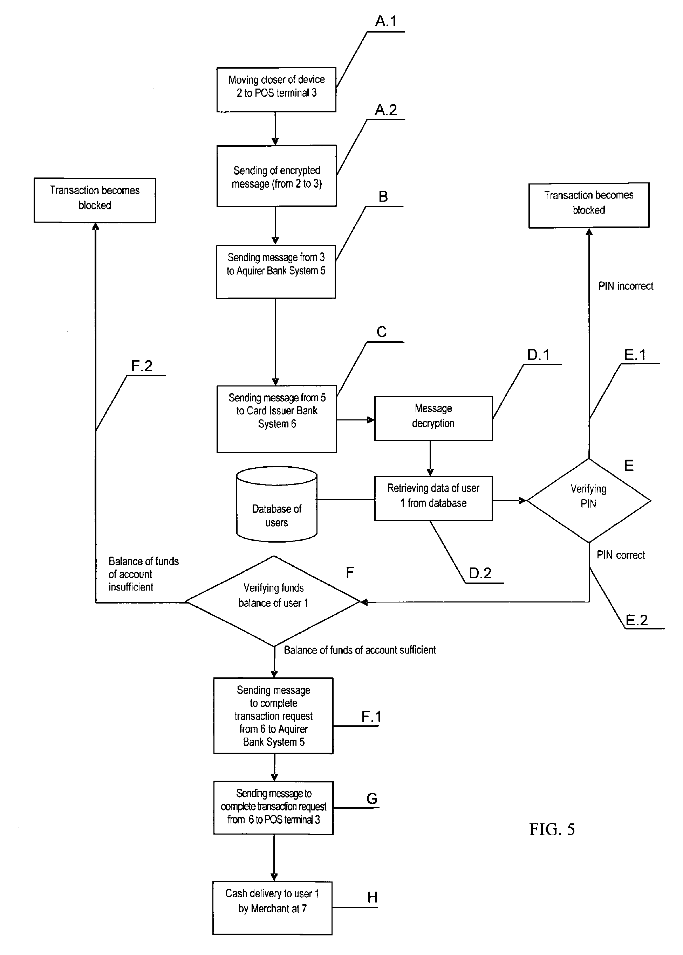

The consecutive steps of the payment transaction are illustrated in the scheme of Fig. 5. In the embodiment according to Fig. 5 the algorithm provides one exemplary method for authentication of the user 1 of the personal mobile device 2, performed at the side of the Card Issuer Bank System 6.
(Step A.1) The user 1, being physically within or in close vicinity of the point-of-sale 7, brings the personal mobile device 2 closer to the POS terminal 3. Optionally (if the personal mobile device 2 is equipped with an arrangement for turning off/deactivation of the proximity communication module 15 or for locking operation of the application 14 for effecting electronic payments), the user activates the proximity communication module 15 and/or operation of the application 14 in the personal mobile device 2.
(Step A.2) The user 1 by means of a graphic interface 19 activates the personal mobile device 2 to sent at least one message including at least authentication data and the amount of the requested cash withdrawal. Authentication is effected by the user 1 of the personal mobile device 2 inputting the PIN to the application 14. In another embodiment, the application 14 for effecting electronic payments operates in a mode with the PIN already input (no necessity to provide the PIN during transaction). The at least one message sent includes: the PIN number, the card ID, the card expiry date and the name of the Card Issuer Bank 6, and the communication between the personal mobile device 2 and the POS terminal 3 is effected by means of the proximity communication technology. The messages are encrypted with the DES/3xDES algorithm or some other algorithm such as AES (Advanced Encryption System). The at least one message includes the MAC code (Message Authentication Code).
(Step B) The POS terminal 3 sends to the Acquirer Bank System 5 such data as: PIN number, requested withdrawal amount, Card ID, name of the Card Issuer Bank 6, and the data are sent in a message encrypted with the DES/3xDES algorithm or another algorithm such as AES (Advanced Encryption System). The at least one message includes the MAC code (Message Authentication Code).
(Step C) Acquirer Bank System 5 sends a message with such data as the PIN number, the requested withdrawal amount, the Card ID, the name of the Card Issuer Bank, to the Card Issuer Bank System 6. The at least one message includes the MAC code (Message Authentication Code).
(Step D.1) At the Card Issuer Bank System 6 the message is subjected to decryption operations in a cryptography module with a pre-established algorithm that corresponds to the encryption algorithm used earlier (the algorithm is defined by the consortium that standardizes cards, terminals, the machines of the Card Issuer Bank, etc.) and verification of the MAC code with the message to which it is attached. According to the subject application, the encryption algorithm can be selected dynamically before the transaction is performed.
(Step D.2) At the Card Issuer Bank System 6 the data of the user 1 are retrieved from the database of the users (i.e. customers with accounts within the Card Issuer Bank 6.1). The information is sent to the verification module which verifies whether the input PIN number is correct.
(Step E.1) If the PIN number is verified as incorrect, the transaction becomes blocked. To the POS terminal 3 (preferably through the Acquirer Bank System 5) a message is sent to notify about rejection of the transaction. The sent message includes the MAC code (Message Authentication Code).
(Step E.2) If the PIN number is verified as correct, the encrypted message is sent in the Card Issuer Bank System 6 along with the account number of the customer - the user 1 of the personal mobile device 2.
(Step F) At the Card Issuer Bank System 6 the balance of funds of the account of the user 1 of the personal mobile device 2 is verified.
(Step F.1) If the balance of funds of the account of the user 1 is greater than the requested amount, authorization is completed and the amount is transferred to the account of the Merchant 4 at the Acquirer Bank 5.1. To the Acquirer Bank System 5 at least one message is sent, said message confirming completion of the transaction request. At least one message includes the MAC code (Message Authentication Code).
(Step F.2) If the balance of funds of the account of the user 1 is smaller than the requested amount, the transaction becomes blocked. To the POS terminal 3, (preferably through the Acquirer Bank System 5), a message is sent, said message informing on rejection of the transaction. The message includes the MAC code (Message Authentication Code).
(Step G) From the Acquirer Bank System 5 to the POS terminal 3 at least one message is sent, in particular a transaction request, and possibly a message confirming the transaction. The at least one message includes the MAC code (Message Authentication Code).
(Step H) The Merchant fulfills the request sent from the Acquirer Bank System 5 to the POS terminal 3. The Merchant 4 at the point-of-sale 7 has cash at hand and this eliminated necessity to transport cash to the place where the cash is withdrawn by the user 1 of the personal mobile device 2. The user 1 receives the requested amount of cash on site from the Merchant 4.

Both the personal mobile device 1 and the POS terminal 3 are equipped with a proximity communication module 15. The solution of the invention is not limited to some specific proximity communication technology to be used in the personal mobile device 1 and in the POS terminal 3. Exemplary technological solutions that can fulfill the function of the proximity communication technology are:
- Near Field Communication (NFC),
- Bluetooth,
- FeliCa,
- graphic tags (QR codes), Infra Red tags, RFID tags, SMS tags.

In the method of the invention, preferably Near Field Communication NFC technology is used. NFC is characterized by simplicity of use, provides possibilities for bidirectional data exchange, and becomes a more and more popular technology in mobile devices due to the fact that it is encompassed by ECMA, ISO/IEC standards.

For the purposes of implementation of the method for performing a payment transaction, for withdrawal cash at the point-of-sale 7 by the user 1 of the personal mobile device 2 with proximity communication module 15, with regard to communication between the devices of the financial infrastructure (application 14, POS terminal 3, Card Issuer Bank System 6, Acquirer Bank System 5), preferably the commonly accessible standard developed by the consortium EMVCo (EMVCo's EMV Contactless Communication Protocol Specification, EMV Contactless Specifications for Payment Systems; EMV Contactless Communication Protocol Specification, Version 2.0, August 2007) is employed. The application 14 in the simplest case models a plastic credit or debit card assigned to the corresponding set of data in the database of the Card Issuer Bank, i.e. it has a similar functionality as the debit and/or credit card. The invention envisages solutions where the application 14 for effecting an electronic payment is equipped with additional functionalities, such as storing information concerning an account balance, predefining PIN, and predefining maximum requested withdrawal amount that can be taken at the point-of-sale without necessity to verify the PIN number, list of transactions, etc.

Embodiment of a payment transaction performed with additional modification of account balances

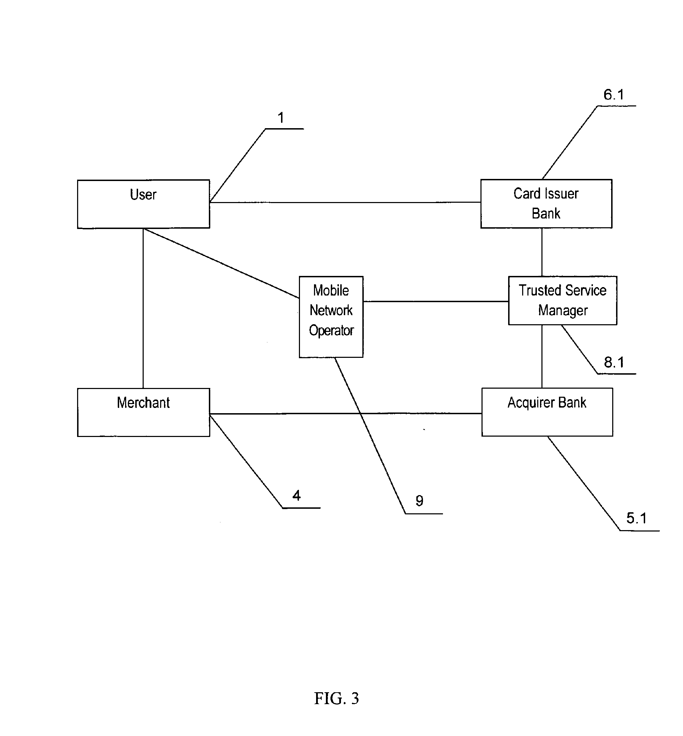

Fig. 3 shows relationships in business model that involves modification of account balances in the individual bank systems for the selected entities and with regard to payments effected or received by the individual entities participating in the final cash withdrawal operations by the user 1 of the personal mobile device 2. Between the entities participating in carrying out the method of the invention additional operations are conducted, for example electronic transfer of the commission collected by the Card Issuer Bank System 6, by the Acquirer Bank System 5, by the Trusted Service Manager System 8. For example, in the course of an operations between the user 1 of the personal mobile device 2 and the Card Issuer Bank 6.1 commission for the withdrawal is transferred, for example in an amount of 0-7% of the cash withdrawal amount requested by the user 1 of the personal mobile device 2. Moreover, in the course of the operations between the Card Issuer Bank 6.1 and the Trusted Service Manager 8.1 commission for service management is collected, e.g. 1.5% of the requested withdrawal amount. Moreover, in the course of the operation between the Trusted Service Manager System 8.1 and the Acquirer Bank 5.1 service management commission is collected, e.g. 1% of the requested withdrawal amount. In turn, in the course of the operations between the Merchant 4 managing the POS terminal 3 at the point-of-sale 7, and the Acquirer Bank 5.1, transaction commission is collected, e.g. 0.5% of the requested withdrawal amount. Moreover, the user 1 of the personal mobile device 2 pays the subscription fee or a prepaid-type fee in favor of the Operator 9 of the cellular telephony network or another entity that manages the memory of the UICC Card, with regard to the user 1 using the services rendered by the Operator 9 of the cellular telephony network or another entity that manages the memory of the UICC Card. The solution also envisages the payment made by the Trusted Service Manager System 8.1 for the use of the memory slot for the application 14 for effecting electronic payments, to the Operator 9 of the cellular telephony network or another entity that manages the memory of the UICC Card.

In the solution of the invention, the cash transfer between the remaining elements, inter alia the POS terminal 3 ↔ the Acquirer Bank 5.1 ↔ the Card Issuer Bank 6.1, is entirely eliminated. The user 1 of the personal mobile device 2 withdraws the requested amount in cash at the point of sale 7, from the Merchant 4 who has cash at his disposal on-site.

In the solution of the invention, the points-of-sale 7 are, but not limited to, for example newsagents, shops, markets, supermarkets, service points of diverse kind, gas stations, bars/restaurants, etc. The invention is mainly applicable to withdrawals of small amounts of cash, in particular in places remote from banks and ATM service facilities.

### Arrangement of a personal mobile device

The invention provides an exemplary embodiment of an arrangement of a personal mobile device 2 within its functional aspect. The illustrated in Fig. 4 arrangement of a personal mobile device 2 comprises a transceiver unit 11 for transmitting and receiving radio frequency signals (RF module) having an antenna 10, a processor 12 coupled with the unit 11, and memory 13 connected to the processor 12, as well as a graphic user interface 19 functionally connected to the processor 12 and memory 13. The personal mobile device 2 according to the invention is equipped with a proximity communication technology module 15 and it comprises:
an antenna 17 for the proximity communication module 15,
a proximity communication module/controller connected to a secure element 18 (such as the UICC card) and to the antenna 17,
an application 14 for effecting electronic payments for the proximal communication module, supporting such functions as of a browser, programming interface (man-machine interface MMI).

For example, the functional structure of the personal mobile device provided with the proximity communication technology module is based on the standardization proposals by GSM Association.

Between the individual elements there operate standardized programming interfaces:
ISO 7816,
USB,
Single Wire Protocol Interface and Host Controller Interface (11),
ISO\IEC 14443A (14),
ISO\IEC 14443A (15).

If the NFC technology is used, a protocol - Single Wire Protocol - developed by the standardization body GSM Association is available, said protocol ensuring secure communication between the UICC card (exemplary embodiment of the secure element) and the NFC module (exemplary embodiment of the proximity communication module).

Smart Card Web Server (SCWS) is a programming interface located on the UICC card. SCWS provides services for the user 1. Communication with the UICC card through SCWS is effected with the use of the browser of the personal mobile device 2. Support for SCWS requires a client of the BIP protocol (Bearer Independent Protocol) and a BIP server, as specified in ETSI TS 102 223.

JSR 257 (Contactless Communication API) provides standardized API for wireless communication, e.g. NFC in applications J2ME (Host Controller Interface HCI as defined in ETSI TS 102 622).

JSR 177 (Security and Trust Services API) is used for communication with the UICC card in a protected manner.

Programming interfaces ISO\IEC 14443A and ISO\IEC 14443B are used for establishing communication parameters between the NFC module and the NFC card reader in the POS terminal 3.

Programming interface ISO\IEC 7816 is used for data exchange between the elements of the device and the NFC module and the POS terminal 3 with the use of the application protocol data unit (APDU) as defined in ISO\IEC 7816-4.

The required programming interfaces: ISO 7816 (ETSI TS 102.221) and Single Wire Protocol/Host Controller Interface (ETSI TS 102.613 and TS 102.622), physical interface and data links between the UICC card and the NFC module may be based on a Single Wire Protocol. Logic interface between the UICC and the NFC module may be based on a Host Controller Interface (HCI).

Implementations of the specification TS 102 221, TS 102 223 and TS 31.111 are required in support communication between the SWP/HCI and the application to handle proximity communication in general (e.g. HCI Connectivity Event).

### Industrial applicability

So-far methods for performing payment transactions are directed to payments effected with the use of personal mobile devices that replace the complete conventional cash turnover process with electronic money circulation. The invention makes these solution complete with providing a method for performing conventional cash withdrawals at diverse points-of-sale, by means of a personal mobile device, such as a cellular phone, equipped with proximity communication technology (e.g. Near Field Communication). The solution facilitates access to conventional money which is still important in minor everyday payments, in particular in places where access to cash is limited or difficult.

## Claims

1. A method for performing a payment transaction between a user (1) of a personal mobile device (2) and a Merchant (4) at a point-of-sale (7) having a POS terminal (3) equipped with proximity communication technology, using the personal mobile device (2) with a proximity communication module (15), where to the user (1) of the personal mobile device (2) an account is assigned in a database of the Card Issuer Bank System (6), in which method the personal mobile device (2) is moved closer to the POS terminal (3) so as to communicate wirelessly the personal mobile device (2) by means of the proximity communication module (15) with the POS terminal (3) at the point-of-sale (7) to sent at least one message comprising at least authentication data and the payment transaction amount, in which method authentication operation is performed and at least one message is sent to the Acquirer Bank System (5) and to the Card Issuer Bank System (6), where the Card Issuer Bank System (6) confirms availability of the transaction to charge the account of the user (1) of the personal mobile device (2), and the Acquirer Bank System (5) accepts the transaction amount, and the Acquirer Bank System (5) modifies the balance of the account of the Merchant (4), and Card Issuer Bank System (6) modifies the balance of the account of the user (1) of the personal mobile device (2), said method being **characterized in that** to the POS terminal (3) there is sent a transaction request to deliver to the user (1) of the personal mobile device (2) the transaction amount in cash to be withdrawn at the point-of-sale (7).

2. A method according to claim 1, **characterized in that** at least one message is sent from the POS terminal (3) through the Acquirer Bank System (5) to the Card Issuer Bank System (4) and/or from the Card Issuer Bank System (4) to the POS terminal (3) through the Acquirer Bank System (5).

3. A method according to claims 1 or 2, **characterized in that** at least one message from the Acquirer Bank System (5) to the Card Issuer Bank System (6) and/or at least one message from the Card Issuer Bank System (6) to the Acquirer Bank System (5) is sent through the Trusted Service Manager System (8).

4. A method according to claims 1-3, **characterized in that** the personal mobile device (2) comprises a secure element (18) with memory where an application (14) is installed for effecting electronic payments, said application comprising at least a set of instructions to execute a payment transaction and data to execute a payment transaction, where the Trusted Service Manager System (8) delivers, activates and/or configures the application (14) for effecting electronic payments for the personal mobile device (2) of the user (1), and the Trusted Service Manager System (8) manages the memory of the secure element (18) in the personal mobile device (2) of the user (1).

5. A method according to claim 4, **characterized in that** delivering, activating, configuring and/or managing the application (14) for effecting electronic payments in the secure element (18) of the personal mobile device (2) is effected through the Mobile Network Operator (9) via the cellular telephony network with the use of an OTA interface.

6. A method according to claim 5, **characterized in that** delivering, activating, configuring and/or managing the application (14) for effecting electronic payments in the secure element (18) of the personal mobile device (2) is conducted by means of sending binary SMS messages.

7. A method according to claim 4, **characterized in that** delivering, activating, configuring and/or managing the application (14) for effecting electronic payments in the secure element (18) of the personal mobile device (2) is effected with the use of a terminal connected by wire or wirelessly to the Internet network, which terminal communicates with the personal mobile device (2) of the user (1) by wire or by the proximity communication module.

8. A method according to claims 4-7, **characterized in that** secure element (8) is the UICC Card.

9. A method according to claims 4-8, **characterized in that** the authentication operation is performed with the use of the application (14) for effecting electronic payments, installed in the personal mobile device (2) of the user (1).

10. A method according to claims 1-9, **characterized in that** the authentication operation is performed through the Card Issuer Bank System (6), upon entering the PIN number by the user (1) of the personal mobile device (2).

11. A method according to claims 1-10, **characterized in that** the transaction request to deliver to the user (1) of the personal mobile device (2) the transaction amount in cash is sent by the Acquirer Bank System (5) to the POS terminal (3).

12. A method according to claims 1-11, **characterized in that** the user (1) of the personal mobile device (2) is a holder of a debit and/or credit card, associated to the account data stored within the Card Issuer Bank System (6), and sending of at least one message between the personal mobile device (2) and the POS terminal (3) is conducted using a protocol for wireless communication for debit/credit cards.

13. An arrangement of a personal mobile device (2) comprising at least a transceiver unit (11) for transmitting and receiving radio frequency signals, having an antenna (10) for receiving radio frequency signals, a processor coupled with the transceiver unit (11), memory (13) connected to the processor (12), and a graphic user interface (19) connected functionally to the processor (12) and memory (13), which arrangement comprises a proximity communication module (15), a proximity communication module controller (16) and an antenna (17) for the proximity communication module (15), **characterized in that** it comprises a secure element (18) having a processor for executing instructions with the use of the proximity communication module (15), connected to the memory where an application (14) for effecting electronic payments is stored.

14. An arrangement according to claim 13, **characterized in that** the secure element (18) is the UICC card containing the application (14) for effecting electronic payments.

15. An arrangement according to claims 13 or 14, **characterized in that** the application (14) for effecting electronic payments is the application for carrying out the method as defined in claims 1-12.
